(19) Europäisches Patentamt / European Patent Office / Office européen des brevets

(11) EP 2 768 266 B1

(12) **EUROPEAN PATENT SPECIFICATION**

(45) Date of publication and mention of the grant of the patent:
**02.08.2017 Bulletin 2017/31**

(51) Int Cl.:
**H04W 72/12** *(2009.01)*    *H04W 84/04* *(2009.01)*

(21) Application number: **13305174.8**

(22) Date of filing: **15.02.2013**

(54) **Interference coordination in HetNet**

Interferenz-Koordination in HetNet

Coordination d'interférence dans HetNet

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.08.2014 Bulletin 2014/34**

(73) Proprietor: **ALCATEL LUCENT**
**92100 Boulogne-Billancourt (FR)**

(72) Inventors:
• **Lopez-Perez, David**
**Dublin, 15 (IE)**
• **Kucera, Stepan**
**Dublin, 15 (IE)**
• **Ho, Lester**
**Dublin, 15 (IE)**
• **Claussen, Holger**
**Dublin, 15 (IE)**

(74) Representative: **Berthier, Karine et al**
**Alcatel-Lucent International**
**148/152, route de la Reine**
**92100 Boulogne-Billancourt (FR)**

(56) References cited:
**US-A1- 2011 170 496    US-A1- 2012 014 333**

• **QUALCOMM INCORPORATED: "PDCCH for CA: monitoring set, search space and blind decodes", 3GPP DRAFT; R1-102318 PDCCH FOR CA - MONITORING SET AND BLIND DECODES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 (2010-04-06), XP050419553, [retrieved on 2010-04-06]**
• **NEC GROUP: "PRB indication to UE for ePDCCH transmission", 3GPP DRAFT; R1-123252, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20120813 - 20120817 5 August 2012 (2012-08-05), XP050661142, Retrieved from the Internet: URL:http://www.3gpp.org/ftp/tsg_ran/WG1_RL 1/TSGR1_70/Docs/ [retrieved on 2012-08-05]**

**Description**

FIELD OF THE INVENTION

The present invention relates to a method of selecting transmission parameters of control signalling to be transmitted from a serving base station to user equipment operating in a coverage overlap region of a wireless telecommunications network, a computer program product and base station operable to perform that method.

BACKGROUND

Wireless telecommunication systems are known. In such systems, mobile communication devices (for example, mobile telephones) and base stations provided by network providers are operable to communicate with each other.

In known wireless telecommunication systems, radio coverage is provided to network connectable devices, such as mobile telephones, or wireless devices such as iPads or other similar tablets, within areas known as cells. A base station is located in each cell to provide radio coverage. Typically, network connectable devices in each cell are operable to receive information and data from a base station and to transmit information and data to a base station

User equipment roam through a wireless communications system. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links. Communication between a base station and user equipment occurs on radio links typically referred to as downlinks and communication between user equipment and a base station occurs on radio links referred to as uplinks.

Traditional base stations provide coverage in relatively large geographical areas and those cells are often referred to as macro cells. It is possible to provide a heterogeneous network (HetNet) where smaller sized cells are provided within macro cells. Such smaller sized cells are sometimes referred to as metro cells, micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, a hotspot, an office or a home.

Such small cells are typically provided where the communications coverage provided by the macro cell is poor or where a user wishes to use an alternative communications link provided locally, by the small cell base station, to communicate with the core network, and/or to increase capacity within a network.

Although the deployment of such small cell base stations can provide advantages, unexpected consequences can occur.

Accordingly, it is desired to provide an improved technique for the operation of wireless communication networks.

US 2011/0170496 discloses a way of mitigating PDCCH interference which uses carrier aggregation and cross-scheduling. There are at least two carrier frequencies and some form of coordination between the cells is available. Many different embodiments are disclosed. The earlier "prior art" embodiments, disclose the use of two component carriers CC1 and CC2, the transmit power of one of the carriers of the macro cell being reduced freeing it up for use by the femto cell. The later embodiments disclose an enhanced or extended E PDCCH.

US 2012/0014333 discloses a way of mitigating PDCCH interference which uses time division multiplexing of the control signals. It does suggest that macrocells may transmit PDCCH in the same subframes that small cells transmit in. Such transmission are done in a coordinated manner, the macrocell allocating low power to the PDCCH of nearby UEs and high power to the PDCCH of cell edge UEs. Moreover the macrocell lets small cells know about the power to frequency resource mapping through the use of a PDCCH RNTP IE message so that the small cells know the intention/actions of the macrocell to mitigate PDCCH interference.

"PDCCH for CA: monitoring set, search space and blind decodes" from Qualcomm, 3GPP TSG RAN WG1 #60bis, 12 - 16 April 2010, Beijing, China pages 1/ 3 to 3/3 discloses providing UEs with a PDCCH monitoring set such that it is restricted when cross carrier signalling is enabled.

NEW Group "PRB indication to UE for PDCCH transmission" R1-123252 3GPP RAN WG1, 5 August 2012 considers ePDCCH and reserving PUBS for PDCCH signalling and indicating this to UEs. PDCCH provides increased resources for control signals compared to PDCCH by using PUBS in the PDCCH domain. This document focuses on the signalling needed from the BS to the UE to make sure that the latter is aware of those PDCCH channels (or resource blocks) carrying its control information, and how to change these channels and provide the required signalling in a dynamic manner to benefit from channel selectivity (control information is mapped to resources with good channel conditions; inter-cell interference coordination for control information also possible through coordinated resource block allocation across cells).

## SUMMARY

A first aspect provides a method of selecting transmission parameters of control signalling to be transmitted from a serving base station to user equipment operating in a coverage overlap region of a wireless telecommunications network; said network comprising said serving base station configured to support a region of radio coverage which overlaps a region of further radio coverage supported by a further base station; said serving base station and further base station being configured to support said region and further region of radio coverage using common radio spectrum; said method comprising: receiving at said serving base station an indication of a portion of a control region of said common radio spectrum intended for use for transmission of control signalling by said further base station in said coverage overlap region comprising: receiving an indication of a portion of said common radio spectrum over which to apply a transmit power offset and receiving an indication of user equipment being served by said further base station in said overlap region; selecting at said serving base station transmission parameters of control signalling to be transmitted from the serving base station to user equipment operating in said coverage overlap region to prevent disruption to control signalling transmitted by said further base station in said coverage overlap region; and calculating the portion of the control region of said common radio spectrum intended for use for transmission of control signalling by said further base station in said coverage overlap region from said received indication of user equipment.

The first aspect recognizes that heterogeneous networks (HetNets) pose challenges in mobility management within a network, since use of small cells results in a large number of deployed cells each having a small region of radio coverage than a macro cell and increases handovers. An increase in mobility events typically results in increased network signaling and network overheard.

Handover failures in co-channel deployments including macrocell-metrocell deployments may be caused by the failure to successfully receive control signalling. Control signaling may be critical to operation in a network and appropriate decoding of such signaling can be crucial for successful data channel decoding and continued user equipment operation.

The first aspect recognizes that control signaling may be particularly subject to interference in a region of coverage overlap between two base stations providing radio coverage, and that failure of control signaling might lead to failure of a handover process. By coordinating control signaling transmission parameters specifically in the overlap region it is possible to maintain good spectrum re-use across the entire region of coverage supported by a serving base station and further base stations and yet use interference coordination techniques to mitigate interference effects in the overlap region.

The first aspect recognizes that by matching the operation of a base station in an overlap region to take account of likely operation of a neighbor or adjacent base station, it is possible to ameliorate interference issues which might interfere with fundamental control signaling which user equipment requires to operate within a network.

The first aspect may find particular use in a heterogeneous network. Since provision of low power nodes in a heterogeneous network, for example, supporting metrocells, may significantly increase downlink inter-cell interference to macrocell users in edge regions, control signaling failure at a source base station is more likely to happen during macro-to-metro handovers than in a macro-to-macro handover.

A network may operate such that all base stations and user equipment are aware of a formula defining a user search space $S_k^L$. That formula typically does not allow for scheduling of specific PDCCHs in specific CCEs, since the exact PDCCH candidate to CEE mapping in each subframe is completely defined by user RNTI and subframe number and not linked to intelligent scheduling decisions. Thus, by informing adjacent base stations of user equipment determined to be operating in an overlap region, or receiving identity information (RNTI) information at a serving base station regarding decisions being implemented by adjacent base stations, it is possible to know where control signaling for such users is likely to be scheduled and arrange for that signaling to be disrupted minimally by choosing to avoid or use a low transmission power in those regions likely to be used by adjacent base stations, at least in relation to scheduling decisions for users operating in an overlap region.

Accordingly, common radio spectrum may be divided into a set of sub regions and those sub-regions may be allocated to base stations for use in overlap region(s) in a coordinated manner. In some embodiments, the control region of radio spectrum may be divided into $R$ control sub-regions of equal size, where the number of control sub-regions $R$ is greater than the maximum number of neighboring (or interfering) cells to a given cell. Thus the orthogonality of at least one sub-region can be ensured.

Further aspects and embodiments described herein may provide methods to enhance control signalling reception by providing for a degree of appropriate Inter-Cell Interference Coordination (ICIC) and, in some implementations, may provide a means for improved mobility management in HetNets.

In some embodiments, said control signaling comprises one or more of: downlink scheduling grants, uplink scheduling grant, power control commands or uplink transmission feedback messaging. Decoding appropriate network control signaling such as, for example, downlink and uplink scheduling grants and power control commands, may be critical for proper network performance including mobility management and handover events. In some embodiments, said control signaling may comprise signaling carried on, for example, a Physical Dedicated Control Channel (PDCCH) or Physical Hybrid ARQ Indicator Channel (PHICH). PHICHs are allocated within a sub-frame control region in a manner similar to a PDCCH and typically carry Hybrid Automatic Repeat Request (HARQ) ACK/NACK indicating whether a cell has correctly received a transmission on an uplink data channel. Such signaling assists with control of data transmission processes within a network.

In some embodiments, the control signaling may comprise signaling carried on a PDCCH channel. During handover in a network, a PDCCH failure can occur at a serving, or source base station, for example, eNodeB, if a radio link failure timer (i.e. T310 timer) is triggered and/or is still running when user equipment receives a Handover_command message (mobility_Control_Information) in, for example, a RRC_Connection_Reconfiguration_Command from the source eNodeB. As a result, a user's handover_command reception fails due to bad radio conditions and hence a handover failure occurs. PDCCH failure may also occur at the target eNodeB if a user's DL_RACH_response and Handover_complete
(RRC_Connection_Reconfiguration_Command_complete) message reception fails during handover execution. By coordinating PDCCH allocation between base stations in an overlap region, it may be possible to mitigate interference likely to be experienced by those channels.

In one embodiment, the transmission parameters comprise one or more of: selection of a portion of a control region on which to transmit the control signalling; selection of a transmission power offset to be applied in relation to the control signalling.

In one embodiment, the control region of a network subframe is effectively divided into a number of user search sub-spaces, such that user search sub-spaces within a cell may be allocated different base line transmit powers. Search user sub-spaces allocated high transmit powers in a cell can be mapped to resource elements which neighboring cells are mapping to user search sub-spaces allocated low transmit powers.

Such a division and power allocation allows base stations, for example, eNodeBs to operate such that upon detection of high mobility or cell-edge users, which are likely to perform handovers, a base station supporting the serving cell of such a user can operate to allocate key control channels, for example, the PDCCHs of such users, to high-power search sub-spaces, and those high power search spaces are arranged within the network such that they overlap with low-power search sub-spaces of adjacent cells. Such an approach, which results in coordination between cells, can result in enhanced critical channel reception, for example, improved PDCCH signal qualities, and thus may assist when aiming to reduce handover failure within a network.

In one embodiment, the method further comprises: determining whether served user equipment is operating in the overlap region. According to various embodiments, the number of sub-regions can be selected in an off-line planning stage, through cell provisioning, or in a more dynamic manner through self-organizing centralized or decentralized methods. By receiving an indication of a sub region in which it may apply a power offset, and in particular a power boost, a base station implicitly receives an indication that further base stations are likely to use a region of spectrum in the overlap region which is not the region allocated to itself. Once the control sub-regions are implemented, each base station may be operable to use higher-transmit power in a pre-selected set of sub-regions and a lower-transmit power in all the others at least in relation to users operating in overlap coverage regions. As a result, within a given cell, some parts of the CCE vector are power boosted compared to others. By coordinating the actions taken amongst cells provided in a particular area, it can be arranged that the power boosted resource elements in one cell overlap with non-power boosted resource elements in neighboring cells.

In some embodiments, it is possible to account for uneven traffic distribution amongst cells. For example, it may be appreciated that a macrocell may be more likely to have a large number of cell-edge users than a metrocell. Accordingly, in one embodiment, the ratio of high-transmit power to low-transmit power sub-regions in different types of cell can vary. In some embodiments, the serving base station comprises a macro cell base station and the further base station comprises a small cell base station. In some embodiments, both the serving base station and the further base station comprise base stations of the same type, that is to say, they support a region of radio coverage which is substantially identical in size. That is to say, both a serving base station and further base station may comprise a macro base station or a small cell base station.

In order to identify which users should use the power boosted regions or are using boosted regions, various approaches can be taken: For example, if a number of power boosted CCEs is given, a base station may be operable to identify users operating within its region of coverage experiencing particularly poor channel conditions by monitoring the wideband SINRs reported. Abase station may then be operable allocate power boosted CCEs users identified to be experiencing poor radio channel conditions. Alternatively, a base station may be operable to identify an average number of users likely to perform a handover and dimension and coordinate its operation with that of a neighboring cell to allocate the power boosted CCEs accordingly. In some embodiments, users likely to perform a handover may be identified by comparing a difference between Reference Signal Received Powers (RSRPs) of a serving and "best" neighboring cell(s) against a threshold indicative of likely handover request. If the difference is determined to be smaller than the threshold, it is indicative that the user is at a cell-edge and is likely to perform a handover.

In one embodiment, determining whether served user equipment is operating in the overlap region comprises: receiving an indication of channel condition experienced by user equipment and identifying served users experiencing poor channel condition. In one embodiment, determining whether served user equipment is operating in the overlap region comprises receiving an indication of a difference between reference signal received powers from the serving base station and further base station and determining, based on the difference, which served users are operating in the overlap region.

In one embodiment, selecting transmission parameters of control signalling to be transmitted from a serving base station to user equipment operating in the coverage overlap region to prevent disruption to control signalling transmitted by the further base station in the coverage overlap region comprises transmitting to user equipment operating in the coverage overlap region using the portion of the common radio spectrum over which the transmit power offset is to be applied. Accordingly, by using a power boosted region of resource for edge users, or users determined to be in the overlap, on the assumption that further base stations are operating to avoid allocation of such resource to users operating in the overlap region may offer a reduction in interference within the overlap region.

In one embodiment, the network comprises a plurality of further base stations, which each support a region of radio coverage and the serving base station coverage region overlaps a region of further radio coverage supported by said plurality of further base stations, and said method further comprises receiving an indication of a portion of a control region of said common radio spectrum intended for use for transmission of control signalling by each further base station in each coverage overlap region; and selecting transmission parameters of control signalling to be transmitted from a serving base station to user equipment operating in each coverage overlap region to prevent disruption to control signalling transmitted by an appropriate further base station in each coverage overlap region.

A second aspect provides a computer program product operable, when executed on a computer, to perform the method of the first aspect.

A third aspect provides a serving base station configured to select transmission parameters of control signalling to be transmitted to user equipment operating in a coverage overlap region of a wireless telecommunications network; said network comprising said serving base station configured to support a region of radio coverage which overlaps a region of further radio coverage supported by a further base station; said serving base station and further base station being configured to support said region and further region of radio coverage using common radio spectrum; said serving base station comprising: control logic operable to receive an indication of a portion of a control region of said common radio spectrum intended for use for transmission of control signalling by said further base station in said coverage overlap region, said indication comprising an indication of a portion of said common radio spectrum over which to apply a transmit power offset and an indication of user equipment being served by said further base station in said overlap region; and implementation logic operable to select transmission parameters of control signalling to be transmitted from a serving base station to user equipment operating in said coverage overlap region to prevent disruption to control signalling transmitted by said further base station in said coverage overlap region; wherein said control logic is further operable to calculate the portion of the control region of said common radio spectrum intended for use for transmission of control signalling by said further base station in said coverage overlap region from said received indication of user equipment.

In some embodiments, the control signaling may comprise: signaling carried on a PDCCH or PHICH channel.

In some embodiments, said control signaling comprises one or more of: downlink scheduling grant, uplink scheduling grants, power control commands or uplink transmission feedback messaging.

In one embodiment, the control logic is operable to receive an indication of a portion of the common radio spectrum over which to apply a transmit power offset and calculate from that indication a indication of a remaining portion which is intended for use for transmission of control signalling by said further base station in said coverage overlap region.

In one embodiment, the control logic is operable to determine whether served user equipment is operating in the overlap region.

In one embodiment, the control logic is operable to determine whether served user equipment is operating in the overlap region by receiving an indication of channel condition experienced by user equipment and identifying served users experiencing poor channel condition.

In one embodiment, the control logic is operable to determine whether served user equipment is operating in the overlap region by receiving an indication of a difference between reference signal received powers from the serving base station and further base station and determining, based on the difference, which served users are operating in the overlap region.

In one embodiment, the implementation logic is operable to select transmission parameters of control signalling to be transmitted from a serving base station to user equipment determined to be operating in the coverage overlap region to prevent disruption to control signalling transmitted by the further base station in the coverage overlap region by transmitting to user equipment operating in the coverage overlap region using the portion of the common radio spectrum over which the transmit power offset is to be applied.

In one embodiment, the network comprises a plurality of further base stations, which each support a region of radio coverage and the serving base station coverage region overlaps a region of further radio coverage supported by said plurality of further base stations, and said method further comprises receiving an indication of a portion of a control region of said common radio spectrum intended for use for transmission of control signalling by each further base station in each coverage overlap region; and selecting transmission parameters of control signalling to be transmitted from a serving base station to user equipment operating in each coverage overlap region to prevent disruption to control signalling transmitted by an appropriate further base station in each coverage overlap region.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates schematically the main components of an example heterogeneous network;
Figure 2 illustrates schematically a control region of a subframe in accordance with one embodiment; and
Figure 3 illustrates schematically a power distribution across sub-regions of the control region of a subframe in accordance with one embodiment.

DESCRIPTION OF THE EMBODIMENTS

Components of a wireless telecommunications network typically include user equipment which roam through the wireless telecommunications network. Base stations are provided which support areas of radio coverage. A number of such base stations are provided and are distributed geographically in order to provide a wide area of coverage to user equipment.

When user equipment is within an area of radio coverage served by a base station, communications may be established between the user equipment and the base station over associated radio links. Each base station typically supports a number of sectors within the geographical area of service.

Typically, a different antenna within a base station supports each associated sector. Each base station has multiple antennas. It will be appreciated that different network architectures maybe implemented, including, for example, UMTS systems, WiMAX systems, or a Long Term Evolution (LTE) system. In general, across these architectures, the functionality provided by network nodes described above is provided by network nodes which are named differently but have analogous functionality.

Heterogeneous networks (HetNets) pose challenges in mobility management within a network, since use of small cells results in a large number of deployed cells each having a small region of radio coverage than a macro cell and increases handovers and attempted handover events. An increase in mobility events typically results in increased network signaling and network overhead.

Furthermore, since handover parameters, such as hysteresis and time to trigger, are typically optimized for macrocells rather than small cells, the number of handover failures and ping-pongs experienced by users of a HetNet may result in call drops and thus subscriber dissatisfaction and churn.

A capital issue in mobility performance optimization is finding an appropriate tradeoff between handover failures and ping-pongs. Optimizing handover parameters to reduce handover failures typically increases ping-pongs, and vice versa.

Handover optimization is an intricate problem, exacerbated by provision of a large number of small cells overlaid on a traditional macrocell network, in accordance with a HetNet deployment scenario. It will be appreciated, for example, that due to the milder interference conditions experienced by user equipment at overlap areas between cells in macrocell only deployments, PDCCH performance is not a major issue in relation to handover failures and Inter Cell Interference Coordination (ICIC) in relation to the PDCCH control channel is not necessary.

User equipment velocity is also traditionally an important factor considered in relation to mobility events. In HetNets, high-mobility users are likely to be victim users, since as they pass through a small cell coverage region they may not be able to quickly handover to that small cell, for example, due to time to trigger and handover processing time, even if the small cell could provide better radio link quality whilst the user is in the small cell coverage region. As a result, high-mobility users may experience radio link failure before handover is completed. Enhancement of mobility performance, for example, to mitigate handover failures, may be based upon an assessment of user velocity.

It is, for example, possible to scale time to trigger using a user-specific factor $\alpha \in [o,1]$, selected as a function of a user velocity. According to such an approach, a high-mobility user (using a low $\alpha$ values) is operable to hand over to a target cell earlier than a low-mobility user (using high $\alpha$ values). Accordingly, handover failures may be reduced for high mobility users due to the implementation of a short time to trigger, and ping-pongs effects maybe reduced for the low mobility users due to their implementation of a large time to trigger. Such an approach may not be suited to user equipment operating in a HetNet, since the approach does not prevent high-mobility user equipment requesting handover to a small cell, that handover proving unnecessary in view of the user having only a short time-of-stay in that small cell. As a result, implementation of such a method in a HetNet environment may increase ping-pongs effects for high mobility user equipment. Moreover, if a network is operable to select the factor $\alpha$, network signaling (cell-to-user) is required, and if the user equipment is operable to select factor $\alpha$, no degree of freedom is left to a network operator, that operator being in a position to better improve overall network performance by appropriate selection of $\alpha$ than user equipment.

Resource allocation according to such approaches can be coordinated in time, for example, by preselecting one or more subframe for use by high mobility users, in frequency, for example, by preselecting one or more component carrier for use by high mobility users, or in space, for example, by choosing beam directions. In addition, in order to protect low-mobility users from ping-pong effects, large times to trigger are allocated to low-mobility users.

It will be appreciated that adoption of this approach which splits available resources between high and low mobility users, provides mobility performance improvement at the expense of unused resources at small cells, which can significantly reduce overall network performance. That is to say, according to such approaches, a whole carrier or subframe is scarified in the frequency and time domain implementations, respectively.

It will be appreciated that both schemes described above rely upon detection of user mobility states, that is to say, whether a user is low-mobility or high-mobility, in order to select an appropriate user-specific factor $\alpha$ or apply enhanced inter-cell interference coordination.

It is possible to tackle some handover failures by increasing transmission power of critical handover control signaling, for example, the signaling transmitted on a PDCCH. For example, transmit power allocations maybe such that a base station, for example, eNodeB, is operable to allocate larger transmit powers to the PDCCHs of user equipment in a network that report poor channel conditions, for example, low Channel Quality Indicator (CQI) values. However, increasing transmit power of such user equipment may affect other users in neighboring cells, which can result in suboptimal overall network operation.

## Overview

Before discussing the embodiments in any more detail, first an overview will be provided.

It will be appreciated that network control signalling is required for efficient overall network operation, for example, to support handover events within a network. Some control channels, for example, Physical Dedicated Control Channels (PDCCHs), carry downlink and uplink scheduling grants and power control commands. Decoding appropriate network control signaling such as, for example, downlink and uplink scheduling grants and power control commands, is critical for proper network performance including mobility management and handover events.

Aspects and embodiments described herein may improve critical control signaling reception, for example, signaling carried on a PDCCH, to mitigate chances of handover failure in a network, including those networks structured to have a heterogeneous network architecture. Aspects may operate, in their highest abstraction, to: partition an LTE subframe control region into high and low power sub-regions, such that there exists "orthogonal" coordinated allocations among macrocells and metrocells in terms of transmit power, and allocate the critical control signaling of users determined to meet criteria indicative that they are at an edge of a metrocell coverage region to appropriate region of the LTE subframe control region so as to mitigate interference experienced by critical control signaling and enhance its reception.

In one embodiment, a user-specific control channel, for example, PDCCH search space is defined within a control region of a resource subframe.

In an LTE network, a resource subframe is divided into a control and a data region. The control region comprises a set of contiguous Control Channel Elements (CCEs) that expand all across the system bandwidth and the first 3 OFDM (Orthogonal frequency-division multiplexed) symbols of each subframe. One CCE comprises 4 contiguous Resource Element Groups (REG), and each REG comprises 4 contiguous resource elements (not considering resource elements containing reference symbols or other signaling symbols). CCEs are numbered from 0 to $N_{CCE,k}$-1, where k is the subframe index and $N_{CCE,k}$ is the total number of CCEs in the control region of subframe k.

In order to ensure that only an intended user is able to successfully decode signaling carried on a channel, for example, PDCCH, an eNodeB within an LTE network is operable to scramble information carried on a channel, for example, PDCCH, using appropriate Radio Network Temporal Identifiers (RNTIs) (an identifier associated with each user equipment operating in the network), and thereafter map signaling, for example PDCCH signaling, into specific CCEs. For example, user-data-related PDCCHs are scrambled with an intended user RNTI.

User equipment is operable to decode control signaling PDCCHs via blind decoding and knowledge of its own user RNTI. Users other than an intended one have a different user RNTI, and thus will not be able to correctly decode the PDCCH signaling for another user.

In order to reduce blind decoding complexity, user equipment in a network is operable to monitor a subset of CCEs, referred to as "PDCCH candidates" within each subframe. Such monitoring comprises: attempting to decode each of the PDCCHs in the set of PDCCH candidates according to all specified Downlink Control Information (DCI) formats. The subset of CCEs or "PDCCH candidates" monitored by each user is defined in terms of search spaces. There are common search spaces used for cell signaling, and user-specific search spaces used for data traffic within in a cell.

A search space $S_k^L$ at an aggregation level L ($L \in \{1,2,4,8\}$) is given by a fixed number of PDCCH candidates. A larger aggregation level implies stronger coding and more CCEs to transmit a given PDCCH. An aggregation level assigned to a user maybe selected based on that user's CQI (Channel Quality Indicator) reports. The PDCCH candidates of different users in a cell may overlap at a given time, and if the PDCCH candidates of a user are allocated to another user or users in a given subframe, a further user cannot be scheduled in that subframe and has to wait for a subsequent subframe.

For a user with a given RNTI, the CCEs corresponding to the PDCCH candidate $m$ of search space $S_k^L$ are defined by the following formulation:

$$ L \cdot \left[ (Y_k + m) \bmod \left\lfloor N_{CCE} / L \right\rfloor \right] + i \, , $$

$$ (1) $$

where:

- $m = 0,..., M^{(L)}-1$ with $M^{(L)}$ being the number of PDCCH candidates to monitor per search space according to an aggregation level $L$;
- $i = o,...,L-1;$ and
- $Y_k$ is defined by

$$ Y_k = A \cdot Y_{k-1} \bmod D \, , $$

$$ (2) $$

where:

- $Y_{-1}$ = RNTI $\neq$ o (the user RNTI is defined in [oooA-FFF2]);
- $A$ = 39827;
- $D$ = 65537; and
- $k$ is the subframe number within a radio frame.

The number of PDCCH candidates $M^{(L)}$ and their sizes in terms of CCEs according to aggregation level $L$ is set by 3GPP standards.

User search spaces hop with the subframe number k in order to provide some degree of frequency/time diversity, and its exact frequency/time location in each subframe $k$ depends on the subframe number, user RNTI, and the aggregation level.

An eNodeB in an LTE network operates to allocate PDCCHs within a user search space, that allocation being scrambled with a user RNTI. The eNodeB is operable to select a particular PDCCH candidate within the search space defined in accordance with formulation (1).

A user in an LTE network is operable to blindly search over the search space given by (1) and decode all PDCCH candidates using its RNTI. This process allows a user to find allocated PDCCHs at a relatively low searching cost, that is to say, at a search cost lower than decoding all possible PDCCH allocations.

Although all base stations and user equipment are aware of formulation (1) and operate using formulation (1), there is no coordination between cells.

According to one embodiment, channel reception, for example, PDCCH reception, may be enhanced by modifying the search space definition $S_k^L$ set out in (1) such that Inter Cell Interference Coordination (ICIC) is possible. Such an embodiment may require a small update in the standard definition set out in (1).

In one embodiment, the control region of a network subframe is effectively divided into a number of search sub-spaces, such that search sub-spaces within a cell may be allocated different base line transmit powers. Search sub-spaces allocated high transmit powers in a cell can be mapped to resource elements which neighboring cells are mapping search sub-spaces allocated low transmit powers.

Such a division and power allocation allows base stations, to operate such that upon detection of high mobility or cell-edge users, which are likely to perform handovers, a base station supporting a the serving cell of a user can operate to allocate key control channels, for example, the PDCCHs of such users, to high-power search sub-spaces, and those high power search spaces are arranged within the network such that they overlap with low-power search sub-spaces of adjacent cells. Such an approach, which results in coordination between cells, can result in enhanced critical channel reception, for example, improved PDCCH signal qualities, and thus may assist when aiming to reduce handover failure within a network.

Aspects and embodiments described herein may modify the PDCCH candidate to CCE mapping of search space $S_k^L$, i.e. formulation (1) set out above, to allow scheduling of specific PDCCHs in specific CCEs, and permit highly mobile or cell-edge users to benefit from power boosted search-subspaces. The formulation (1) given above defining a search space $S_k^L$ does not allow for scheduling of specific PDCCHs in specific CCEs, since the exact PDCCH candidate to CEE mapping in each subframe is completely defined by user RNTI and subframe number and not linked to intelligent scheduling decisions.

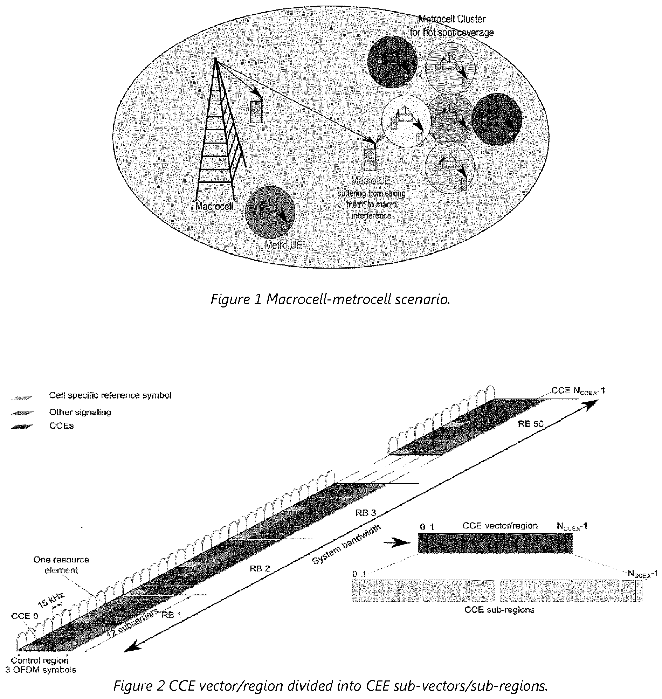

Figure 1 illustrates schematically the main components of an example heterogeneous network. The network shown in Figure 1 comprises: one umbrella macrocell and seven metrocells. The umbrella macrocell and the seven metrocells reuse the same band of radio spectrum. Six of the metrocells are arranged to form a cluster which covers a "hot spot".

In the frequency domain, in the example heterogeneous network illustrated, 10MHz of bandwidth is available, divided into 50 resource blocks (RBs). In the time domain, 3 OFDM symbols per subframe are arranged for use within the control region.

In the scenario shown in Figure 1, the macrocell serves 2 macro users and the metrocells each serve 2 metro users. In each cell illustrated, one user is a cell center user and the other is a cell-edge user, for example, a user connected to the macrocell, but close to an edge of a metrocell coverage region.

Such a cell-edge macrocell user typically suffers strong inter-cell interference due to the proximity of the nearby metrocell. Such inter-cell interference may cause signaling carried on channels from the serving metrocell to fail to reach the user, for example, PDCCH failure may occur. Failure of channel carrying critical control signaling may result in handover failure, particularly if the macro cell edge user has identified that the metro cell is a candidate for handover and the macro cell edge user is moving towards the metrocell.

## Control channel sub-regions

Figure 2 illustrates schematically a control region of a subframe in accordance with one embodiment. In terms of PDCCH, the control region of a subframe can be seen as a vector of CCEs, numbered from 0 to $N_{CCE,k}-1$, where $N_{CCE,k}$ is the total number of CCEs in subframe k. In particular, Figure 2 illustrates a CCE vector/region divided into CEE sub-vectors/sub-regions. In relation to the illustrative scenario shown in Figure 1, in which there are 50 Resource Blocks (RBs) and 3 OFDM symbols in the control region, $N_{CCE,k}$ is estimated to be 410.

In some embodiments, the control region is divided into R control sub-regions of equal size, where the number of control sub-regions R is greater than the maximum number of neighboring (or interfering) cells to a given cell. Thus the orthogonality of at least one sub-region can be ensured.

Division of the control region division according to such embodiments results in $R$ control sub-regions, each one comprising $N_{CCE,k,r} = N_{CCE,k}/R$ CCEs, where $r$ is a sub-region index.

According to various embodiments, the number of sub-regions can be selected in an off-line planning stage, through cell provisioning, or in a more dynamic manner through self-organizing centralized or decentralized methods.

In the scenario illustrated in Figure 1, and in a network having resource comprising 50 RBs and 3 OFDM symbols in the control region, $R$ may be selected to be *12.*

At the minimum level of aggregation, for example, for a user with good channel quality, 1 PDCCH uses 1 CCE. Thus in the example shown, 410 PDCCH can be scheduled in a subframe. At the maximum level of aggregation, typically for a user with bad channel quality, 1 PDCCH uses 8 CCEs. Thus in the example shown, 51 PDCCHs can be scheduled in a subframe. Thus, on average, 230 PDCCHs may be scheduled per subframe, and each of 12 control sub-regions would therefore contain 19 PDCCHs (i.e. 19 users). Sub regions of that size are likely to be large enough to support efficient overall network operation.

## Coordinated power allocation to each control channel sub-region

Once the control sub-regions are implemented, each cell is operable to use higher-transmit power in a selection of sub-regions and a lower-transmit power in all the others. As a result, within a given cell, some parts of the CCE vector are power boosted compared to others. That is to say, some control sub-regions are consistently transmitted at a higher transmit power than remaining control sub-regions.

By coordinating the actions taken amongst cells provided in a particular area, it can be arranged that the power boosted resource elements in one cell overlap with non-power boosted resource elements in neighboring cells. Provided *R* (the number of control sub-regions) is chosen to be sufficiently large, such inter-cell coordination is likely to be possible.

In some embodiments, it is possible to account for uneven traffic distribution amongst cells. For example, it may be appreciated that a macrocell may be more likely to have a large number of cell-edge users than a metrocell. Accordingly, in one embodiment, the ratio of high-transmit power to low-transmit power sub-regions in different types of cell can vary. That ratio and exact CCE frequency-power mapping may be determined in various ways including, for example, in an off-line planning stage, through cell provisioning, or in a more dynamic manner through self-organizing centralized or decentralized methods.

In the scenario illustrated schematically in Figures 1 and 2, for a network in which there are 50 RBs and 3 OFDM symbols in the control region, at least 1 of the 12 sub-regions is power boosted.

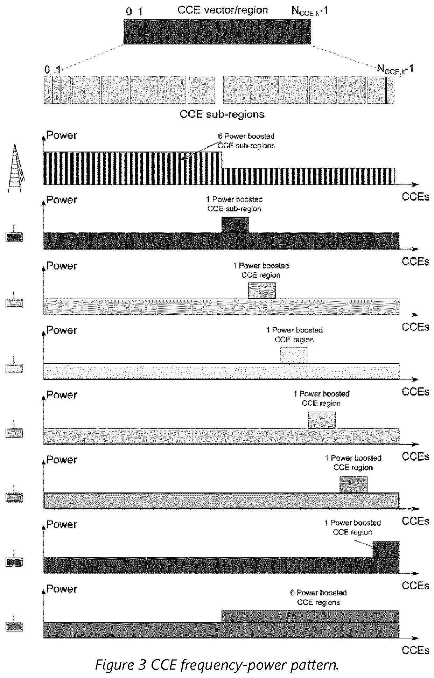

Figure 3 illustrates schematically a power distribution across sub-regions of the control region of a subframe in accordance with one embodiment. In particular, Figure 3 illustrates schematically a possible implementation suitable for use in the network shown in Figure 1. It will be appreciated that different cells can have differing numbers of power boosted sub-regions as a result of cell coordination across a geographical region of interest.

### PDDCH channel eNodeB assignment and user decoding

According to some aspects and embodiments, by detecting users likely to perform a handover and arranging operation of cells and users in a network such that control signaling, such as that carried on PDCCHs, of the users likely to perform a handover are allocated to power boosted CCEs and that those CCEs are within the search spaces of the users, it may be possible to improve overall network operation.

In order to identify which users should use the power boosted CCEs, various approaches can be taken: For example, if the number of power boosted CCEs is given, an eNodeB maybe operable to identify users operating within its region of coverage experiencing particularly poor channel conditions by monitoring the wideband SINRs reported. The eNodeB may then be operable allocate power boosted CCEs users identified to be experiencing poor radio channel conditions. Alternatively, a eNodeB may be operable to identify an average number of users likely to perform a handover and dimension and coordinate its operation with that of a neighboring cell to allocate the power boosted CCEs accordingly. In some embodiments, users likely to perform a handover may be identified by comparing a difference between Reference Signal Received Powers (RSRPs) of a serving and "best" neighboring cell(s) against a threshold indicative of likely handover request. If the difference is determined to be smaller than the threshold, it is indicative that the user is at a cell-edge and is likely to perform a handover.

In support of *R* CCE sub-regions, the user search space defined in (1) is divided into R search sub-spaces, i.e., $S_{k,r}{}^L$, r $\in$ [0,R-1], where CCEs corresponding to the PDCCH candidate $m_r$ of the search sub-space $S_{k,r}{}^L$ are given by the following formulation:

$$r\frac{\mathrm{N_{CCE,k}}}{R}+\left(L\cdot\left\lceil (Y_k+m_r)\,\mathrm{mod}\left\lfloor\frac{\mathrm{N_{CCE,k}}/R}{\mathrm{L}}\right\rfloor\right\rceil+i\right)$$

$$(3)$$

where $m_r = 0,...,M_r{}^{(L)}$-1 with $M_r{}^{(L)}$ being the number of PDCCH candidates per new search sub-space to monitor according to aggregation level *L*.

As a consequence of definition (3), an eNodeB has a degree of freedom to decide which sub-region to allocate to each user. The allocation of a sub-region of CCEs maybe achieved by scheduling the proper search space sub-region r to each user.

In some aspects and embodiments, an eNodeB is operable to allocate, for example, PDCCHs, associated with mobile cell-edge users, to those sub-spaces r which have been power boosted. Accordingly, an edge user can be assigned a specific search sub-space depending on its mobility status and/or location.

Thereafter, a user will search over all its search sub-spaces r $\in$ [0,R-1], whether those sub spaces are power boosted or not, until the user finds its allocated PDCCHs. By searching over all search-subspaces, it can be ensured that a user will can find its PDCCHs without a need for an eNodeB to signal a specific sub-space used.

In order to keep decoding complexity low, the sum number of PDCCH candidates over all user search sub-spaces can be chosen in such a way that is equal or similar to the number of PDCCH per user search space in known techniques.

Alternative approach

In an alternative implementation, aspects and embodiments are the proposed concept can be implemented such that an improved search sub-space 'follows' highly mobile and/or edge-users rather than vice versa as described above. In order to enhance reception of critical control signaling carried on channels, for example, PDCCH, serving eNodeB may be operable to boost the power of PDCCH candidates used by mobile or cell-edge users, and let neighboring eNodeBs know the RNTI of such users so that the neighbouring eNodeBs are not operable allocate high powers in the PDCCH candidates of such users. It will be understood that, in general, PDCCH candidates are completely defined by formulation (1) which is known by all cells and user equipment.

Upon the detection of a user that is likely to perform a handover, a serving eNodeB may, according to some embodiments, be operable to: power boost all CCEs used by the PDCCHs of such a user, those CCEs being completely defined by formulation (1) at all times; signal the RNTI of such a user to all neighboring eNodeBs through a coordination message so that they are aware of the moving user and ensure that neighboring eNodeBs do not allocate high power operation to CCEs to be used by the user for a given period of time. Since all eNodeBs in the network are aware of formulation (1), knowing the RNTI of the mobile user is enough to know which CCEs are likely to be used by it at all times.

Such an implementation is standard compliant but may require signaling through the macro-to-metro interfaces, for example, an X2 interface. Coordination among eNodeBs may ensure better overall network performance.

Extensions

Aspects and embodiments described above maybe extended such that the techniques can be used to enhance Physical Hybrid ARQ Indicator Channel (PHICH) reception. PHICHs are allocated within a sub-frame control region in a manner similar to PDCCH and carry Hybrid Automatic Repeat Request (HARQ) ACK/NACK indicating whether a cell has correctly received a transmission on the uplink data channel.

Aspects and embodiments described above maybe extended such that the techniques can be used to enhance operation of macrocell-femtocell or multi-tier networks.

Aspects and embodiments may provide a method of: enhancing PDCCH signal quality and thus reducing the chance of experiencing PDCCH failure; aspects and embodiments may reduce the number of handover failures, may allow PDCCH mobility related commands to be decoded with higher probability; and may allow for effective spatial reuse, since PDCCH user related grants can be decoded with higher probability

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method of selecting transmission parameters of control signalling to be transmitted from a serving base station to user equipment operating in a coverage overlap region of a wireless telecommunications network; said network comprising said serving base station configured to support a region of radio coverage which overlaps a region of further radio coverage supported by a further base station; said serving base station and further base station being configured to support said region and further region of radio coverage using common radio spectrum; said method comprising:

   receiving at said serving base station an indication of a portion of a control region of said common radio spectrum intended for use for transmission of control signalling by said further base station in said coverage overlap region comprising: receiving an indication of a portion of said common radio spectrum over which to apply a transmit power offset and receiving an indication of user equipment being served by said further base station in said overlap region;
   selecting at said serving base station transmission parameters of control signalling to be transmitted from the serving base station to user equipment operating in said coverage overlap region to prevent disruption to control signalling transmitted by said further base station in said coverage overlap region; and
   calculating the portion of the control region of said common radio spectrum intended for use for transmission of control signalling by said further base station in said coverage overlap region from said received indication of user equipment.

2. A method according to claim 1, wherein said transmission parameters comprise one or more of: selection of a portion of a control region on which to transmit said control signalling; selection of a transmission power offset to be applied in relation to said control signalling.

3. A method according to claim 1 or claim 2, in which said control signaling comprises one or more of: downlink scheduling grants, uplink scheduling grants, power control commands or uplink transmission feedback messaging.

4. A method according to any preceding claim, wherein the control signaling comprises: signaling carried on a PDCCH or PHICHS channel.

5. A method according to any preceding claim, wherein selecting transmission parameters of control signalling to be transmitted from a serving base station to user equipment operating in said coverage overlap region to prevent disruption to control signalling transmitted by said further base station in said coverage overlap region comprises transmitting to user equipment operating in said coverage overlap region using said portion of said common radio spectrum over which said transmit power offset is to be applied.

6. A method according to any preceding claim, wherein said method further comprises determining whether served user equipment is operating in said overlap region.

7. A method according to claim 6, wherein determining whether served user equipment is operating in said overlap region comprises receiving an indication of channel condition experienced by user equipment and identifying served users experiencing poor channel condition.

8. A method according to claim 6, wherein determining whether served user equipment is operating in said overlap region comprises receiving an indication of a difference between reference signal received powers from the serving base station and further base station and determining, based on said difference, which served users are operating in said overlap region.

9. A computer program product operable, when executed on a computer, to perform the method of any one of claims 1 to 8.

10. A serving base station configured to select transmission parameters of control signalling to be transmitted to user equipment operating in a coverage overlap region of a wireless telecommunications network; said network comprising said serving base station configured to support a region of radio coverage which overlaps a region of further radio coverage supported by a further base station; said serving base station and further base station being configured to support said region and further region of radio coverage using common radio spectrum; said serving base station comprising:

control logic operable to receive an indication of a portion of a control region of said common radio spectrum intended for use for transmission of control signalling by said further base station in said coverage overlap region, said indication comprising an indication of a portion of said common radio spectrum over which to apply a transmit power offset and an indication of user equipment being served by said further base station in said overlap region; and

implementation logic operable to select transmission parameters of control signalling to be transmitted from the serving base station to user equipment operating in said

coverage overlap region to prevent disruption to control signalling transmitted by said further base station in said coverage overlap region; wherein

said control logic is further operable to calculate the portion of the control region of said common radio spectrum intended for use for transmission of control signalling by said further base station in said coverage overlap region from said received indication of user equipment.

**Patentansprüche**

1. Verfahren zum Auswählen von Übertragungsprararametern einer Steuersignalisierung zum Übertragen von einer bedienenden Basisstation auf Teilnehmergeräte, die in einem Abdeckungsüberlappungsbereich eines drahtlosen Telekommunikationsnetzwerks betrieben werden; besagtes Netzwerk umfasst besagte bedienende Basisstation, die konfiguriert ist zum Unterstützen eines Funkabdeckungsbereichs, der einen Bereich mit weiterer Funkabdeckung überlappt, der von einer weiteren Basisstation unterstützt wird; besagte bedienende Basisstation und weitere Basisstation sind konfiguriert zum Unterstützen besagten Bereichs und weiteren Funkabdeckungsbereichs unter Benutzen eines gemeinsamen Funkspektrums;
besagtes Verfahren umfasst:

Empfangen an besagter bedienender Basisstation einer Anzeige eines Anteils eines Steuerbereichs von besagtem gemeinsamen Funkspektrum, vorgesehen für die Übertragung einer Steuersignalisierung seitens besagter weiteren Basisstation in besagtem Abdeckungsüberlappungsbereich, umfassend: Empfangen einer Anzeige eines Anteils von besagtem gemeinsamen Funkspektrum, auf den ein Übertragungsleistungsversatz angewendet werden soll, und Empfangen einer Anzeige von Teilnehmergeräten, die von besagter weiteren Basisstation in besagtem Überlappungsbereich bedient werden;
Auswählen an besagter bedienender Basisstation von Übertragungsparametern einer Steuersignalisierung, die von der bedienenden Basisstation übertragen werden soll auf Teilnehmergeräte, die in besagtem Abdeckungsüberfappungsbereich betrieben werden, um eine Unterbrechung der Steuersignalisierung zu verhindern, die von besagter weiteren Basisstation in besagtem Abdeckungsüberlappungsbereich übertragen wird; und
Berechnen des Anteils des Steuerbereichs von besagtem gemeinsamen Funkspektrum, vorgesehen für die Übertragung einer Steuersignalisierung seitens besagter weiteren Basisstation in besagtem Abdeckungsüberlappungsbereich von besagter empfangener Anzeige von Teilnehmergeräten.

2. Verfahren nach Anspruch 1, wobei besagte Übertragungsparameter eins oder mehrere umfassen von: Auswählen eines Anteils eines Steuerbereichs, auf den besagte Steuersignalisierung übertragen werden soll; Auswählen eines Übertragungsleistungsverzugs, der anzuwenden ist in Bezug auf besagte Steuersignalisierung.

3. Verfahren nach Anspruch 1 oder 2, in dem besagte Steuersignalisierung eine oder mehrere umfasst von: Downlink-Planungsgenehmigungen, Uplink-Planungsgenehmigungen, Leistungssteuerungsbefehle oder Uplink-Übertragungs-Feedbacfsnachrichten.

4. Verfahren nach einem beliebigen der vorhergehenden Ansprüche, wobei die Steuersignalisierung umfasst: Befördern auf einem PDCCH- oder PHICH-Kanal.

5. Verfahren nach einem beliebigen der vorhergehenden Ansprüche, wobei das Auswählen der Übertragungsparameter einer Steuersignalisierung, die von einer belegenden Basisstation auf Teilnehmergeräte übertragen wird, die in besagtem Abdeckungsüberlappungsbereich betrieben werden, um eine Unterbrechung der Steuersignalisierung zu verhindern, die von besagter weiteren Basisstation in besagtem Abdeckungsübertappungsbereich übertragen wird, umfassend das Übertragen auf Teilnehmergeräte, die in besagtem Abdeckungsüberlappungsbereich betrieben werden, unter Benutzen besagten Anteils von besagtem gemeinsamen Funkspektrum, auf den besagter Übertragungsleistungsversatz angewendet werden soll.

**6.** Verfahren nach einem beliebigen der vorhergehenden Ansprüche, wobei besagtes Verfahren weiterhin umfasst das Bestimmen, ob das bediente Teilnehmergerät in besagtem Überlappungsbereich betrieben wird.

**7.** Verfahren nach Anspruch 6, wobei das Bestimmen, ob das bediente Teilnehmergerät in besagtem Überlappungsbereich betrieben wird, umfasst das Empfangen einer Anzeige einer Kanalbedingung, die von dem Teilnehmergerät festgestellt wird, und das Identifizieren von bedienten Teilnehmern, die eine schlechte Kanalbedingung festgestellt haben.

**8.** Verfahren nach Anspruch 6, wobei das Bestimmen, ob besagtes bedientes Teilnehmergerät in besagtem Überlappungsbereich betrieben wird, umfasst das Empfangen einer Anzeige einer Differenz zwischen einem Referenzsignal, das Leistung von der bedienenden Basisstation empfangen hat bzw. von einer weiteren Basisstation, und Bestimmen, auf Grundlage der Differenz, welche bedienten Teilnehmer in besagtem Überlappungsbereich betrieben werden.

**9.** Computerprogramm-Produkt, betreibbar für das Durchführen des Verfahrens eines beliebigen der Ansprüche 1 bis 8, wenn es auf einem Computer ausgeführt wird.

**10.** Bedienende Basisstation, konfiguriert zum Auswählen von Übertragungsparametern einer Steuersignalisierung zum Übertragen auf Teilnehmergeräte, die in einem Abdeckungsüberlappungsbereich eines drahtlosen Kommunikationsnetzwerks betrieben werden, wobei besagtes Netzwerk besagte bedienende Basisstation umfasst, die konfiguriert ist zum Unterstützen eines Funkabdeckungsbereichs, der einen Bereich weiterer Funkabdeckung überlappt, der von einer weiteren Basisstation unterstützt wird; besagte bedienende Basisstation und weitere Basisstation sind konfiguriert zum Unterstützen besagten Bereichs und weiteren Funkabdeckungsbereichs unter Benutzen eines gemeinsamen Funkspektrums;
besagte bedienende Basisstation umfassend:

Steuerlogik, betreibbar zum Empfangen einer Anzeige eines Anteils eines Steuerbereichs besagten gemeinsamen Funkspektrums, vorgesehen für das Übertragen einer Steuersignalisierung seitens besagter weiteren Basisstation in besagtem Abdeckungstiberlappungsbereich, wobei besagte Anzeige umfasst eine Anzeige eines Anteils von besagtem gemeinsamen Funkspektrum, auf den ein Übertragungsleistungsversatz angewendet werden soll, und eine Anzeige von Teilnehmergeräten, die von besagter weiteren Basisstation in besagtem Überlappungsbereich bedient werden; und
Umsetzungslogik, betreibbar zum Auswählen von Übertragungsparametern einer Steuersignalisierung, die von der bedienenden Basisstation auf Teilnehmergeräte übertragen werden soll, die in besagtem Abdeckungsüberlappungsbereich betrieben werden, um eine Unterbrechung der Steuersignalisierung zu verhindern, die von besagter weiteren Basisstation in besagtem Abdeckungsüberlappungsbereich übertragen wird, wobei besagte Steuerlogik weiterhin betreibbar ist zum Berechnen des Anteils des Steuerbereichs von besagtem gemeinsamen Funkspektrum, vorgesehen für die Übertragung einer Steuersignalisierung seitens besagter weiteren Basisstation in besagtem Abdeckungsüberlappungsbereich von besagter empfangener Anzeige von Teilnehmergeräten.

**Revendications**

**1.** Procédé de sélection de paramètres de transmission de signalisation de commande à transmettre d'une station de base de desserte à une équipement utilisateur fonctionnant dans une zone de chevauchement de couverture d'un réseau de télécommunications sans fil; ledit réseau comprenant ladite station de base de desserte configurée pour prendre en charge une zone de couverture radio qui chevauche une autre zone de couverture radio prise en charge par une autre station de base ; lesdites station de base de desserte et autre station de base étant configurées pour prendre en charge lesdites zone et autre zone de couverture radio en utilisant un spectre radio commun ; ledit procédé comprenant les étapes suivantes :

recevoir au niveau de ladite station de base de desserte une indication d'une partie d'une zone de commande dudit spectre radio commun destinée à être utilisée pour la transmission de la signalisation de commande par ladite autre station de base dans ladite zone de chevauchement de couverture, l'étape comprenant : la réception d'une indication d'une partie dudit spectre radio commun sur laquelle appliquer un décalage de la puissance de transmission et la réception d'une indication d'équipement utilisateur desservi par ladite autre station de base dans ladite zone de chevauchement ;
sélectionner au niveau de ladite station de base de desserte les paramètres de transmission de la signalisation de commande à transmettre de la station de base de desserte à l'équipement utilisateur fonctionnant dans ladite zone de chevauchement de couverture afin d'éviter une perturbation de la signalisation de commande transmise par ladite autre station de base dans ladite zone de chevauchement de couverture ; et

calculer la partie de la zone de commande dudit spectre radio commun destinée à être utilisée pour la transmission de la signalisation de commande par ladite autre station de base dans ladite zone de chevauchement de couverture à partir de ladite indication d'équipement utilisateur reçue.

2. Procédé selon la revendication 1, dans lequel lesdits paramètres de transmission comprennent au moins l'un des éléments suivants : une sélection d'une partie d'une zone de commande dans laquelle transmettre ladite signalisation de commande ; une sélection d'un décalage de la puissance de transmission à appliquer en relation avec ladite signalisation de commande.

3. Procédé selon la revendication 1 ou la revendication 2, dans lequel ladite signalisation de commande comprend au moins l'un des éléments suivants : des attributions de planification sur liaison descendante, des attributions de planification sur liaison montante, des commandes de réglage de la puissance ou des messages de retour sur la transmission sur liaison montante.

4. Procédé selon l'une quelconque des revendications précédentes, dans lequel la signalisation de commande comprend : la signalisation acheminée sur un canal PDCCH ou PHICH.

5. Procédé selon l'une quelconque des revendications précédentes, dans lequel la sélection des paramètres de transmission de la signalisation de commande à transmettre d'une station de base de desserte à un équipement utilisateur fonctionnant dans ladite zone de chevauchement de couverture afin d'éviter une perturbation de la signalisation de commande transmise par ladite autre station de base dans ladite zone de chevauchement de couverture comprend la transmission à l'équipement utilisateur fonctionnant dans ladite zone de chevauchement de couverture en utilisant ladite partie dudit spectre radio commun sur laquelle ledit décalage de la puissance de transmission doit être appliqué.

6. Procédé selon l'une quelconque des revendications précédentes, dans lequel ledit procédé comprend en outre l'étape consistant à déterminer si l'équipement utilisateur desservi fonctionne dans ladite zone de chevauchement.

7. Procédé selon la revendication 6, dans lequel l'étape consistant à déterminer si l'équipement utilisateur desservi fonctionne dans ladite zone de chevauchement comprend la réception d'une indication d'une condition de canal rencontrée par l'équipement utilisateur et l'identification des utilisateurs desservis rencontrant de mauvaises conditions de canal.

8. Procédé selon la revendication 6, dans lequel l'étape consistant à déterminer si l'équipement utilisateur desservi fonctionne dans ladite zone de chevauchement comprend la réception d'une indication d'une différence entre les puissances d'un signal de référence reçues de la station de base de desserte et de l'autre station de base et la détermination, selon ladite différence, des utilisateurs desservis qui fonctionnent dans ladite zone de chevauchement.

9. Produit-programme informatique permettant, lorsqu'il est exécuté sur un ordinateur, de réaliser le procédé selon l'une quelconque des revendications 1 à 8.

10. Station de base de desserte configurée pour sélectionner des paramètres de transmission de signalisation de commande à transmettre à un équipement utilisateur fonctionnant dans une zone de chevauchement de couverture d'un réseau de télécommunications sans fil ; ledit réseau comprenant ladite station de base de desserte configurée pour prendre en charge une zone de couverture radio qui chevauche une autre zone de couverture radio prise en charge par une autre station de base ; lesdites station de base de desserte et autre station de base étant configurées pour prendre en charge lesdites zone et autre zone de couverture radio en utilisant un spectre radio commun ; ladite station de base de desserte comprenant :

une logique de commande permettant de recevoir une indication d'une partie d'une zone de commande dudit spectre radio commun destinée à être utilisée pour la transmission d'une signalisation de commande par ladite autre station de base dans ladite zone de chevauchement de couverture, ladite indication contenant une indication d'une partie dudit spectre radio commun sur laquelle appliquer un décalage de la puissance de transmission et une indication d'équipement utilisateur desservi par ladite autre station de base dans ladite zone de chevauchement ; et

une logique de mise en oeuvre permettant de sélectionner les paramètres de transmission de la signalisation de commande à transmettre de la station de base de desserte à l'équipement utilisateur fonctionnant dans ladite zone de chevauchement de couverture afin d'éviter une perturbation de la signalisation de commande transmise par ladite autre station de base dans ladite zone de chevauchement de couverture ; dans laquelle ladite logique de commande permet en outre de calculer la partie de la zone de commande dudit spectre radio commun destinée à être utilisée pour la transmission de la signalisation de commande par ladite autre station de base dans ladite zone de chevauchement de couverture à partir de ladite indication d'équipement utilisateur reçue.

*Figure 1 Macrocell-metrocell scenario.*

*Figure 2 CCE vector/region divided into CEE sub-vectors/sub-regions.*

*Figure 3 CCE frequency-power pattern.*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110170496 A

- US 20120014333 A

**Non-patent literature cited in the description**

- PDCCH for CA: monitoring set, search space and blind decodes. *3GPP TSG RAN WG1 #60bis,* 12 April 2010, 1, , 3-3, 3

- PRB indication to UE for PDCCH transmission. *R1-123252 3GPP RAN WG1,* 05 August 2012